# EUROPÄISCHE PATENTSCHRIFT

(11) **EP 1 195 850 B1**
(45) Veröffentlichungstag und Bekanntmachung des Hinweises auf die Patenterteilung: **26.10.2005**
(21) Anmeldenummer: 01120924.4
(22) Anmeldetag: 31.08.2001
(51) Int. Cl.: H01R 4/66, H01R 4/04, H01R 4/64, H01R 12/32, H02K 5/22, H01R 13/66

(54) **Massekontakt für ein elektrisches Gerät**
Earthing contact for an electrical device
Contact de mise à la masse pour un appareil électrique

(30) Priorität: 05.10.2000 DE 20017093 U
(43) Veröffentlichungstag der Anmeldung: 10.04.2002
(73) Patentinhaber: Bühler Motor GmbH, 90459 Nürnberg (DE)
(72) Erfinder: Vogel, Thomas, 90607 Rückersdorf (DE)

(56) Entgegenhaltungen:
- EP-A- 0 075 220
- DE-A- 4 411 178
- US-A- 5 259 770
- US-A- 5 624 277

## Beschreibung

Die Erfindung betrifft einen Massekontakt für ein elektrisches Gerät, insbesondere einen elektrischen Motor, mit wenigstens einem Kontaktkörper (1), der einen elastisch verformbaren Kern (18) aus einem Elastomer und einen den Kern umgebenden flexiblen und elektrisch leitenden Mantel (17), der wenigstens ein Metall enthält, aufweist, ein elektrisches Gerät mit einem solchen Massekontakt und eine Anordnung mit einem solchen elektrischen Gerät und einem Gerätegehäuse. Der Begriff elektrisches Gerät umfaßt dabei jede elektrisch arbeitende Einrichtung, insbesondere auch elektrische und/oder elektronische Bauteile und Schaltungen.

Es sind elektrische Motoren bekannt, beispielsweise ein Motor mit der Serien-Nr. 13.044 der Firma Bühler Motor GmbH, Nürnberg, bei denen zur elektromagnetischen Entstörung zwei Massekondensatoren (sog. Y-Kondensatoren) über an einem Motorgehäuse des Motors von innen anliegende Kontaktdrähte kontaktiert sind. Diese Kontaktdrähte werden außen am Motor durch Schweißen befestigt. Die Drahtstücke dieses bekannten Massekontaktes für einen Elektromotor weisen jedoch eine so hohe Induktivität auf, daß dadurch die Wirksamkeit der Entstörkondensatoren teilweise zunichte gemacht wird.

Aus dem US-Patent 5,259,770 die als nächstliegender Stand der Technick angesehen wird, ist ein elektrischer Verbinder mit einem Kontaktkörper für ein elektrisches Gerät bekannt, der einen elastisch verformbaren Kern aus einem Elastomer aufweist, der von einem flexiblen und elektrisch leitenden Metallmantel umgeben ist.

Der Erfindung liegt deshalb die Aufgabe zugrunde, einen Massekontakt für ein elektrisches Gerät, insbesondere für einen elektrischen Motor, anzugeben, bei dem Anschlußinduktivitäten reduziert sind.

Diese Aufgabe wird gemäß der Erfindung dadurch gelöst, dass der Massekontakt eine mit dem Gerät elektrisch verbundenen oder verbindbaren Gerätekontaktfläche (10) und eine mit der Masse elektrisch verbundenen oder verbindbaren Massekontaktfläche (40) aufweist, wobei der Kontaktkörper (1) zwischen der Gerätekontaktfläche (10) und der Massekontaktfläche (40) zu deren elektrischer Kontaktierung angeordnet oder anordenbar ist. Hierdurch ist eine vergleichsweise großflächig ausbildbare und damit induktivitätsarme sowie einfach montierbare Massekontaktierung realisiert.

Vorteilhafte Ausgestaltungen und Weiterbildungen des Massekontakts sowie ein elektrisches Gerät und eine Anordnung mit einem Massekontakt gemäß der Erfindung sind in den vom Anspruch 1 abhängigen Ansprüchen angegeben.

In einer besonders vorteilhaften Ausführungsform ist der Mantel des Kontaktkörpers aus einem Metall wie Nickel (Ni) und/oder Kupfer (Cu) gebildet und/oder besteht aus einem Gewebe (textilartiges Material) oder einem Netz oder einem feinmaschigen Gitter. Mit einer Ausbildung des Mantels mit Öffnungen oder Maschen wird zusätzlich eine elektromagnetische Abschirmung im Hochfrequenzbereich erreicht, wobei die Größe und der Abstand der Öffnungen oder Maschen abhängig vom gewünschten Frequenzbereich der abzuschirmenden elektromagnetischen Strahlung sind.

In seiner Gestalt kann der Massekontaktkörper in weiten Grenzen frei gewählt werden. Insbesondere weist der Mantel des Kontaktkörpers im entformten oder im verformten Zustand wenigstens zwei voneinander abgewandte Flachseiten auf. Vorzugsweise weist der Kontaktkörper zumindest über eine Teillänge einen wenigstens annähernd rechteckigen oder ovalen Querschnitt auf, damit auch praktisch ohne oder nur mit einer geringen elastischen Verformung eine flächige Kontaktfläche am Mantel des Kontaktkörpers zur Verfügung steht.

Der Massekontakt umfaßt im Allgemeinen ferner wenigstens eine mit dem Gerät elektrisch verbundene oder verbindbare Gerätekontaktfläche und eine mit der Masse elektrisch verbundene oder verbindbare Massekontaktfläche. Der Kontaktkörper ist nun zwischen der Gerätekontaktfläche und der Massekontaktfläche zu deren elektrischer Kontaktierung angeordnet oder anordenbar. Diese Kontaktierung erfolgt bevorzugt an den voneinander abgewandten Flachseiten des Mantels des Kontaktkörpers. Eine solche große Kontaktfläche am Massekontakt ist induktivitätsarm, wodurch Störströme weiter verringert werden. Dazu wird der Kontaktkörper vorzugsweise an der Gerätekontaktfläche und/oder der Massekontaktfläche mittels einer Klebeverbindung befestigt. Die Klebeverbindung kann in einer Ausführungsform mit einem elektrisch leitenden Klebematerial gebildet sein und in einer alternativen Ausführungsform mit einem elektrisch isolierenden (dielektrischen) klebematerial. Bei einer dielektrischen Klebeverbindung ist diese nur in einem Teilbereich des Kontaktkörpers und der Geiätekontaktfläche und/oder Massekontaktfläche vorgesehen, so daß bei einer (elastischen) Verformung des Kontaktkörpers außerhalb der Klebeverbindung sich noch der Mantel des Kontaktkörpers und die Gerätekontaktfläche und/oder Massekontaktfläche berühren, um die elektrische Kontaktierung sicherzustellen.

Ein elektrisches Gerät, insbesondere elektrischer Motor, mit einem Massenkontakt gemäß der Erfindung kann einfach und störungsarm mit Masse verbunden werden.

In einer bevorzugten Ausführungsform weist das elektrische Gerät eine mit elektrischen oder elektronischen Bauteilen bestückten Leiterplatine auf, an der die Gerätekontaktfläche des Massekontakts, vorzugsweise mit einer Metallisierung, gebildet ist.

Eine besonders zweckmäßige Verwendung findet der Massekontakt in einer Entstörungsschaltung, die wenigstens zwei über den Massekontakt gegen Masse schaltbare oder geschaltete Kondensatoren aufweist, insbesondere zur Unterdrückung von Gleichtaktstörungen in den Versorgungsleitungen. Die Kondensatoren sind vorzugsweise auf der Leiterplatine angeordnet und elektrisch verbunden. Eine besonders geeignete Technik ist dabei die SMD-Bestückungstechnik (Surface Mounted Device).

Die Massekondensatoren sind in einem möglichst kleinen Abstand, insbesondere höchstens 5 mm, vorzugsweise höchstens 3 mm, zum Massekontakt angeordnet, um die Leitungsimpedanz, insbesondere im Hochfrequenzbereich, weiter zu reduzieren.

Das elektrisches Gerät weist ferner vorzugsweise ein Steckkontaktelement zum Verbinden des elektrischen Gerätes mit einer Versorgungsspannungsquelle auf. Die Steckkontaktstifte des Steckkontaktelements sind vorzugsweise mit der Leiterplatine elektrisch verbunden, insbesondere in einem mittleren Bereich der Leiterplatine.

Vorzugsweise ist die Leiterplatine so aufgebaut, daß in einem bezogen auf die Öffnung im Gehäuse vorderen (äußersten) Bereich die Gerätekontaktfläche (Metallisierung) für den Massekontakt vorgesehen ist, in einem mittleren Bereich die Kontaktierung der Steckkontaktstifte des Steckkontaktelements, insbesondere Phase, Nullphase und Erde, und in einem hinteren (innersten) Bereich die Kondensatoren und deren Anschlüsse zu einem elektrischen Verbraucher, insbesondere über dazwischen geschaltete Drosseln oder Induktivitäten. Die Induktivitäten bewirken eine Kompensation von Gegentaktstörungen in den beiden Leitungen, zwischen denen die Versorgungsspannung anliegt. Über die beiden Drosseln liegt die Versorgungsspannung schließlich bei einem Motor, vorzugsweise an zwei mit Federn beaufschlagten Schleifkontakten an, die Stator oder Läufer des elektrischen Motors zur Erzeugung des Magnetfeldes mit Strom versorgen.

Der äußerste Bereich der Leiterplatine, in dem der Massekontakt angeordnet ist, und der mittlere Bereich mit den drei Steckkontaktstiften müssen elektrisch voneinander isoliert sein. Dies kann insbesondere durch eine dielektrische Schutzkappe geschehen, die vorzugsweise von oben mittels Steckstiften auf die Leiterplatine aufgesteckt wird und die beiden Bereich voneinander elektrisch trennt. Der innerste Bereich der Leiterplatine kann, muß aber nicht isoliert sein. Zum Isolieren der Bereiche auf der Leiterplatine kann insbesondere ein Isolierlack oder eine ähnliche Isolierschicht verwendet werden.

Eine Anordnung mit einem elektrischen Gerät und einem Gerätegehäuse für das elektrische Gerät, das als Masse für das elektrische Gerät vorgesehen ist, sowie einem Massekontakt gemäß der Erfindung ist im Anspruch 22 angegeben. In einer bevorzugten Weiterbildung weist das Gerätegehäuse eine Öffnung auf, in die der Kontaktkörper des Massekontaktes ragt und deren Innenwandung als Massekontaktfläche dient, mit der der Kontaktkörper in Kontakt bringbar oder in Kontakt steht. Vorzugsweise ist auch das Steckkontaktelement des elektrischen Gerätes durch die Öffnung im Gerätegehäuse geführt und der Kontaktkörper ist unter elastischer Verformung zwischen dem Steckkontaktelement und dem Gehäuse angeordnet oder anordenbar. Insbesondere kann das Gehäuse aus zwei zusammenfügbaren Teilen bestehen, zwischen denen der Kontaktkörper und ggf. das Steckkontaktelement eingeklemmt werden.

Die Erfindung wird im folgenden anhand von Ausführungsbeispielen weiter erläutert. Dabei wird auf die Zeichnung Bezug genommen. Es zeigen:
- FIG 1: einen Teil eines Motorgehäuses mit einer darin angeordneten Leiterplatine und einem Massekontakt zur Kontaktierung der Leiterplatine mit dem Motorgehäuse,
- FIG 2: die Leiterplatine gemäß FIG 1 in einer etwas vergrößerten Draufsicht,
- FIG 3: die Leiterplatine gemäß FIG 2 mit einem auf der Leiterplatine angeordneten Massekontaktkörper in einer Draufsicht,
- FIG 4: die Ausführungsform gemäß FIG 1 in einer Vorderansicht und
- FIG 5: eine Ausführungsform eines Kontaktkörpers für einen Massekontakt.

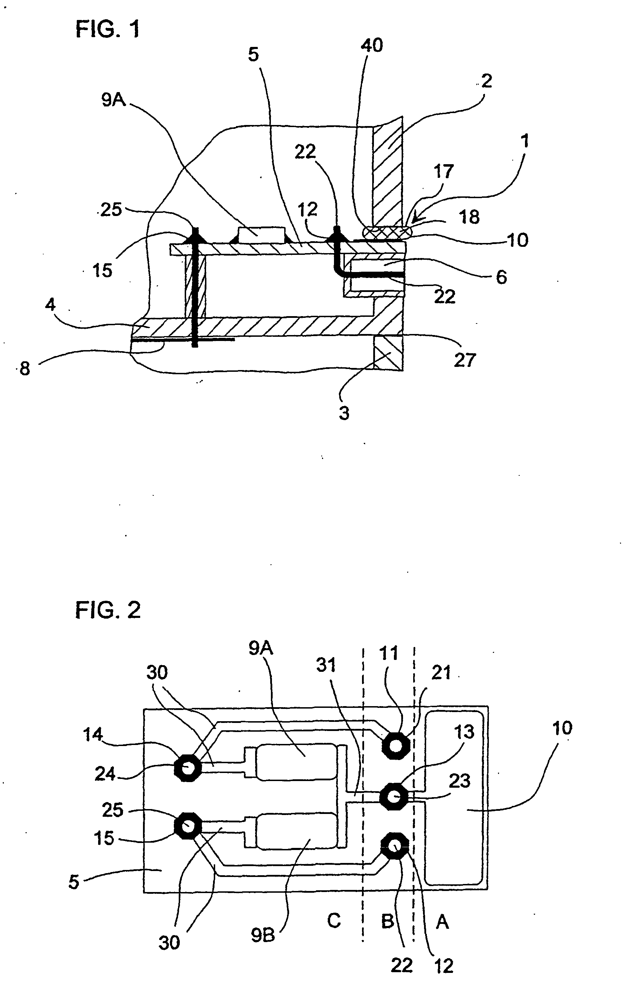

Einander entsprechende Teile sind in den FIG 1 bis 5 mit denselben Bezugszeichen versehen.

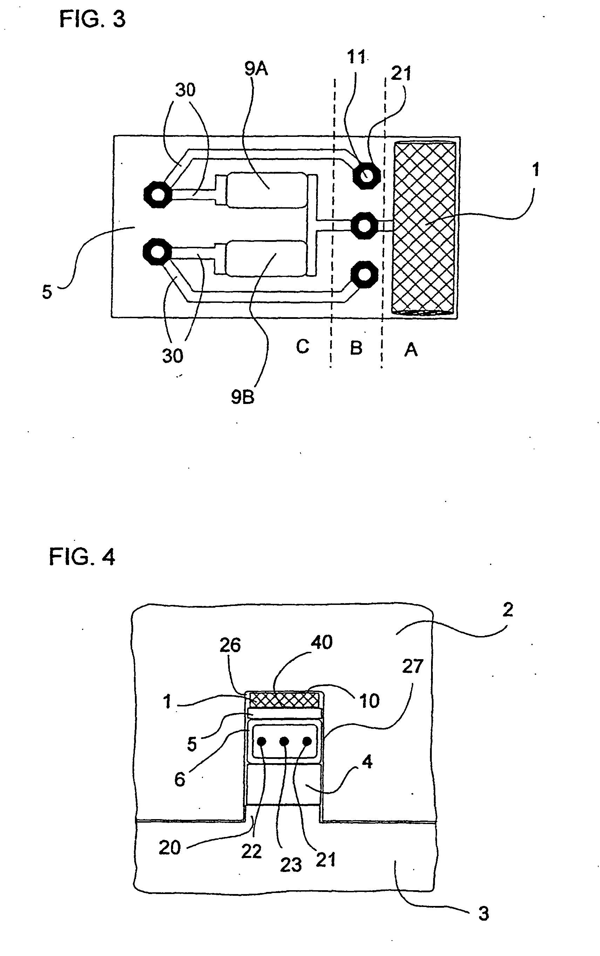

In den FIG 1 bis 4 ist eine Leiterplatte (Leiterplatine) mit 5 bezeichnet. FIG 1 zeigt die Leiterplatte 5 in einer teilweise geschnittenen Seitenansicht fertig montiert im Gehäuse 2 und auf dem Lagerschild 3 eines ansonsten nicht weiter dargestellten Elektromotors. In den FIG 2 und 3 ist die Leiterplatte 5 in einer Draufsicht von oben dargestellt. FIG 4 zeigt die Ausführungsform gemäß FIG 1 in einer Vorderansicht, bei der nur der durch eine Öffnung 27 im Gehäuse 2 ragende Teil der Leiterplatte 5 zu sehen ist.

Die Leiterplatte 5 ist in drei Bereiche (Teilabschnitte) A, B und C unterteilt. In einem vorderen Bereich A ist eine vergleichsweise großflächige Metallisierung vorgesehen, die im folgenden als Gerätekontaktfläche 10 bezeichnet wird. In einem mittleren Bereich B sind nebeneinander drei elektrische Anschlußstellen vorgesehen zum ohmschen Kontaktieren von drei elektrischen Kontaktstiften 21, 22 und 23 über zugehörige Lötstellen 11, 12 und 13. In einem hinteren Bereich C der Leiterplatte 5 sind zwei Kondensatoren 9A und 9B nebeneinander angeordnet und dahinter zwei weitere Anschlußstellen mit jeweils einem über eine zugehörige Lötstelle 14 und 15 elektrisch kontaktierten Kontaktstift 24 und 25 vorgesehen. Der im Bereich B der Leiterplatte 5 in der Mitte zwischen den beiden Kontaktstiften 21 und 22 angeordnete dritte Kontaktstift 23 ist über die Lötstelle 13 mit einer Leiterbahn 31 kontaktiert, die eine elektrische Verbindung des Kontaktstiftes 23 sowohl zur Gerätekontaktfläche 10 im vorderen Bereich A als auch zu den im hinteren Teil C befindlichen beiden Kondensatoren 9A und 9B in einer elektrischen Parallelschaltung herstellt. Der erste Kondensator 9A ist über eine Leiterbahn 30 mit dem über die Lötstelle 14 mit Leiterbahn 30 kontaktierten Kontaktstift 24 elektrisch verbunden und der zweite Kondensator 9B über eine entsprechende Leiterbahn 30 und die Lötstelle 15 mit dem Kontaktstift 25. Die beiden Kontaktstifte 24 und 25 sind ferner über jeweils eine weitere Leiterbahn 30 mit den beiden äußeren Kontaktstiften 21 bzw. 22 im mittleren Bereich B der Leiterplatte 5 verbunden.

Die drei Kontaktstifte 21, 22 und 23 sind nun unterhalb der Leiterplatte 5 nach vorne rechtwinklig abgebogen und in einem Steckkontaktelement (Stecker) in einem Gehäuse aus Kunststoff parallel zueinander als Steckkontaktstifte eingefaßt. Das Steckkontaktelement 6 ist in FIG 1 und FIG 4 dargestellt. Von außen kann nun auf das Steckkontaktelement 6 eine entsprechende - nicht dargestellte - Steckkontaktbuchse mit Aufnahmen für die Kontaktstifte 21, 22 und 23 aufgesteckt werden. Dabei werden an die beiden äußeren Kontaktstifte 21 und 22 die Versorgungsspannung und an den mittleren Kontaktstift 23 die Erde angeschlossen. Die Versorgungsspannung liegt somit auch zwischen den beiden Kontaktstiften 24 und 25 im hinteren Bereich C der Leiterplatte 5 an und kann von dort zur Versorgung des Elektromotors (oder eines anderen elektrischen Gerätes) abgegriffen werden. Zum Abgriff der Versorgungsspannung an den beiden Kontaktstiften 24 und 25 ist an einer unterhalb der Leiterplatte 5 angeordneten Bürstenbrücke jeweils ein Leitblech 8 vorgesehen, das den durch die Leiterplatte 5 nach unten zur Bürstenbrücke führenden Kontaktstift 24 bzw. 25 mit einem zugehörigen - nicht dargestellten - Bürstenkontakt (Schleifkontakt) des Elektromotors elektrisch verbindet.

Zwischen jeden Bürstenkontakt und den zugehörigen Kontaktstift 24 bzw. 25 wird dabei vorzugsweise jeweils noch eine - nicht gezeigte - Drossel (Induktivität, Spule) geschaltet. Die beiden Drosseln bilden zusammen mit den beiden gegen Erde und Masse (Gehäuse 2) geschalteten Kondensatoren 9A und 9B eine Entstörschaltung zur Unterdrückung von Störungen in den Versorgungsleitungen.

Die beiden Kondensatoren 9A und 9B auf der Leiterplatte 5 sind nach Art eines Y über den Kontaktstift 23 gegen Erde bzw. die Gerätekontaktfläche 10 geschaltet und werden deshalb auch als Y-Kondensatoren oder Massekondensatoren bezeichnet. Neben dem über das Steckkontaktelement 6 und den mittleren Kontaktstift 23 bewirkten Erdanschluß sind die beiden Kondensatoren 9A und 9B über die Leiterbahn 31 und über die Gerätekontaktfläche 10 auch an das Gehäuse 2 des Motors als (zusätzliche) Masse anschließbar. Das Gehäuse 2 besteht deshalb zumindest überwiegend aus einem elektrisch leitenden Material, insbesondere einem Metall.

Das Steckkontaktelement 6 ist nun unterhalb der Leiterplatte 5 im wesentlichen unterhalb deren vorderen Bereich A angeordnet und befestigt, beispielsweise verklebt, sowie an ihrer Unterseite auf dem Lagerschild 3 des Elektromotors abgestützt. Der vordere Bereich A der Leiterplatte 5 mit dem darunterliegenden Steckkontaktelement 6 und dem unter dem Steckkontaktelement 6 befindlichen vorderen Bereich des Lagerschildes 3 ist nun durch eine Öffnung 27 (in FIG 1 und FIG 4 dargestellt) des Gehäuses 2, vorzugsweise außen mit dessen Außenseite bündig, eingeführt. Dadurch ist das Steckkontaktelement 6 von außen kontaktierbar.

Zwischen der Leiterplatte 5 und dem die Öffnung 27 von oben begrenzenden Wandungsbereich des Gehäuses 2 ist nun ein Kontaktkörper 1 angeordnet, der einen Kern 18 aus einem elastischen Material und einen den Kern 18 umschließenden Mantel 17 aus einem elektrisch leitenden und in gewissen Grenzen flexiblen Material umfaßt.

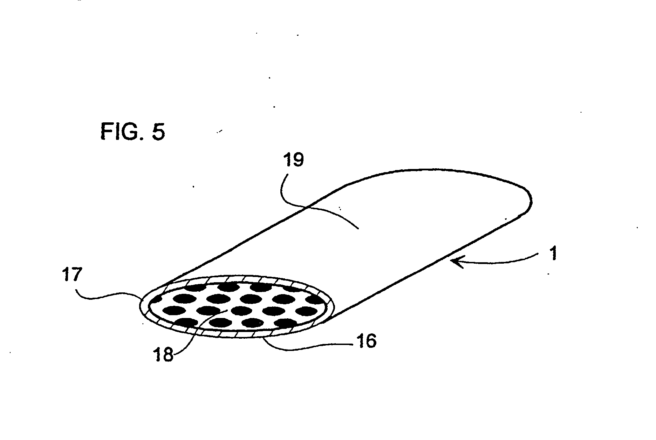

Der Kontaktkörper 1 ist einer bevorzugten Ausführungsform in FIG 5 detaillierter und in einer perspektivischen Ansicht dargestellt. Der Kontaktkörper 1 weist vorzugsweise einen ovalen oder wenigstens annähernd rechteckigen Querschnitt auf und hat somit zwei gegenüberliegende Flachseiten 16 und 19, die zur flächigen Kontaktierung der Gerätekontakfläche 10 auf der Leiterplatte 5 einerseits und der eine Massekontaktfläche 40 bildenden Gehäuseinnenwand an der Öffnung 27 andererseits besonders geeignet sind.

Der Kern 18 des Kontaktkörpers 1 besteht vorzugsweise aus einem Elastomer, das geschlossene Poren oder Zellen einer bestimmten Größe aufweisen kann und insbesondere auch in Form eines Schaumes ausgebildet sein kann. Der Mantel 17 besteht aus einem, insbesondere metallischen, Geflecht, Gewebe oder Netz. Die Maschenweite der einzelnen Maschen oder Öffnungen dieses netzartigen oder gewebeartigen Mantels 17 wird einer gewünschten Dehnbarkeit und Flexibilität des Mantels 17 angepaßt. Als Materialien für den Mantel 17 sind besonders Nickel (Ni) und/oder Kupfer (Cu) geeignet. Für den Kontaktkörper 1 können insbesondere handelsübliche Hochfrequenzdichtungen, beispielsweise leitende Textildichtungen vom Typ WE-LT der Fa. Würth Elektronik, Kupferzell, eingesetzt werden, die in dieser Anwendung praktisch funktionsfremd verwendet werden.

Der Kontaktkörper 1 wird nun unter elastischer Verformung zwischen die Gerätekontaktfläche 10 und die Massekontaktfläche 40 geklemmt. Dazu wird das Gehäuse 2 in einer im wesentlichen senkrecht zur Massekontaktfläche 40 gerichteten Richtung gegen das Lagerschild 3 geführt. Das Gehäuse (siehe FIG 1 und FIG 4) weist dazu einen beispielsweise rechteckigen Ausschnitt 26 auf und das Lagerschild 3 einen ebenfalls vorzugsweise rechteckigen Vorsprung 20, der in den Ausschnitt 26 einführbar ist und kürzer als der Ausschnitt 26 ausgebildet ist, so daß zwischen dem Vorsprung 20 und der Massekontaktfläche 40 am oberen Randes des Ausschnittes 26 die Öffnung 27 verbleibt. Der Abstand zwischen dem Vorsprung 20 und dem der Massekontaktfläche 40 ist nun so bemessen, daß über den von unten an das Lagerschild 3 drückenden Vorsprung 20 über das Steckkontakt element 6 und die Leiterplatte 5 ein Anpreßdruck auf den Kontaktkörper 1 ausgeübt wird, wodurch dieser elastisch verformt wird und eine sichere und flächige Kontaktierung seiner Flachseiten 16 und 19 mit der jeweils gegenüberliegenden Gerätekontaktfläche 10 und Massekontaktfläche 40 sicherstellt.

Durch diese Maßnahmen wird eine sehr einfach realisierbare, robuste Massekontaktierung der mit den Kondensatoren 9A und 9B sowie den nicht dargestellten Drosseln gebildeten Entstörschaltung erreicht.

In Abwandlung zu den gezeigten Ausführungsbeispielen ist es natürlich auch möglich, den Kontaktkörper 1 von innen an die Innenwandung des Gehäuses 2 zu pressen durch eine geeignete konstruktive Ausbildung der Leiterplatte 5, die dann beispielsweise rechteckig abgewinkelt sein kann oder auch im wesentlichen parallel zur Gehäusewandung des Gehäuses 2 angeordnet wird. Die Wandung des Gehäuses 2 kann in allen Ausführungsformen flach oder auch gewölbt, insbesondere zylindrisch gewölbt sein.

Durch den Aufbau der Leiterplatte 5 sind die Kondensatoren 9A und 9B in einem vergleichsweise kurzen Abstand zum mit der Gerätekontaktfläche 10 dem Kontaktkörper 1 und der Massekontaktfläche 40 gebildeten Massekontakt angeordnet und über vergleichsweise flache Leiterbahnen mit diesen verbunden, wodurch im Vergleich zu einer Massekontaktierung mit Kontaktdrähten eine bessere Entstörung im Hochfrequenzbereich erreicht wird. Außerdem können durch den Aufbau gemäß der Erfindung Surface-Mounted-Device (SMD)-Kondensatoren zur Entstörbeschaltung eingesetzt werden. Dies ist ein fertigungstechnischer Vorteil. Durch die große Kontaktfläche des Massekontaktes ist die Massekontaktierung induktivitätsarm, was für die Entstörung vor allem im höheren Frequenzbereich ebenfalls vorteilhaft ist.

Der Kontaktkörper 1 kann mit seiner der Gerätekontaktfläche 10 zugewandten Seite an der Gerätekontaktfläche 10 befestigt werden, insbesondere durch eine Klebeverbindung. Wenn ein elektrisch isolierender Kleber verwendet wird, so kann die Klebeverbindung nur in einem Teilbereich erfolgen. In einem außerhalb diese Teilbereiches liegenden Bereich wird der Kontaktkörper 1 durch den Anpreßdruck elastisch verformt, wodurch ebenfalls eine sichere Kontaktierung zwischen der Mantelfläche des Mantels 17 und der Gerätekontaktfläche 10 erreicht wird. Der Kontaktkörper 1 kann umgekehrt auch an der Massekontaktfläche 40 am Gehäuse 2 befestigt werden. Zum Verkleben des Kontaktkörpers 1 an der Gerätekontaktfläche 10 kann eine beidseitig klebenden Klebefolie verwendet werden. Es ist auch möglich, einen leitfähigen Kleber oder Klebestreifen zu verwenden. In diesem Fall kann die Verklebung über die gesamte Kontaktfläche zwischen der Gerätekontaktfläche 10 und dem Kontaktkörper 1 erfolgen.

Der mittlere Bereich B und der hintere Bereich C der Leiterplatte 5 werden vorzugsweise mittels einer Lackierung oder einer anderen elektrisch isolierenden Abdeckung elektrisch isoliert. In einer besonderen, nicht dargestellten Ausführungsform kann dazu ein von oben auf die Leiterplatte 5 aufsteckbares oder aufclipbares Abdeckteil aus einem elektrisch isolierenden Material, insbesondere einem Kunststoff, vorgesehen sein, das eine Trennwandung zwischen dem vorderen Bereich A und dem mittleren Bereich B zur elektrischen Isolierung der Kontaktstifte 21 und 22 von der Gerätekontaktfläche 10, sowie vorzugsweise auch eine Abdeckung von oben zum mechanischen Schutz der nach oben von der Leiterplatte 5 wegragenden Enden der Kontaktstifte 21 bis 23 umfaßt.

Der Massekontakt gemäß der Erfindung wurde anhand der Ausführungsbeispiele in der Anwendung für eine Entstörschaltung für einen Elektromotor beschrieben. Der Massekontakt gemäß der Erfindung ist aber nicht auf diese Anwendung beschränkt, sondern ist prinzipiell für jedes elektrische Bauteil oder Gerät oder jede elektrische Schaltung geeignet, bei der eine Massekontaktierung, beispielsweise zur Entstörung, erforderlich ist. Der Elektromotor ist in seiner Anwendung ebenfalls nicht beschränkt. Vorzugsweise ist der Elektromotor für eine Strömungsmaschine, insbesondere eine Pumpe, oder für einen Antrieb eines Spiegels, insbesondere im Kfz-Bereich, geeignet.

### Bezugszeichenliste

- 1: Kontaktkörper
- 2: Gehäuse
- 3: Lagerschild
- 4: Bürstenbrücke
- 5: Leiterplatte
- 6: Steckkontaktelement
- 8: Leitblech
- 9A, 9B: Kondensator
- 10: Gerätekontaktfläache
- 11 bis 15: Lötstelle
- 16: Flachseite
- 17: Mantel
- 18: Kern
- 19: Flachseite
- 20: Vorsprung
- 21 bis 25: Kontaktstift
- 26: Ausschnitt
- 27: Öffnung
- 30, 31: Leiterbahn
- 40: Massekontaktfläche
- A,B,C: Bereich

## Patentansprüche

1. Massekontakt für ein elektrisches Gerät, insbesondere einen elektrischen Motor, mit wenigstens einem Kontaktkörper (1), der einen elastisch verformbaren Kern (18) aus einem Elastomer und einen den Kern umgebenden flexiblen und elektrisch leitenden Mantel (17), der wenigstens ein Metall enthält, aufweist, **dadurch gekennzeichnet, dass** der Massekontakt eine mit dem Gerät elektrisch verbundenen oder verbindbaren Gerätekontaktfläche (10) und eine mit der Masse elektrisch verbundenen oder verbindbaren Massekontaktfläche (40) aufweist, wobei der Kontaktkörper (1) zwischen der Gerätekontaktfläche (10) und der Massekontaktfläche (40) zu deren elektrischer Kontaktierung angeordnet oder anordenbar ist.

2. Massekontakt nach Anspruch 1, bei dem der Mantel des Kontaktkörpers aus einem Gewebe oder Netz oder feinmaschigen Gitter gebildet ist, vorzugsweise nach Art einer Hochfrequenzdichtung.

3. Massekontakt nach Anspruch 1 oder Anspruch 2, bei dem der Mantel des Kontaktkörpers wenigstens ein Metall, insbesondere Kupfer und/oder Nickel enthält.

4. Massekontakt nach einem der vorherigen Ansprüche, bei dem der Kern des Kontaktkörpers (1) aus einem geschlossenzelligen Elastomer gebildet ist.

5. Massekontakt nach einem der vorherigen Ansprüche, bei dem der Kontaktkörper wenigstens teilweise oder durchgehend einen wenigstens annähernd rechteckigen oder ovalen Querschnitt aufweist.

6. Massekontakt nach einem der vorhergehenden Ansprüche, bei dem der Mantel des Kontaktkörpers wenigstens zwei voneinander abgewandte Flachseiten (16, 19) aufweist oder unter elastischer Verformung in eine Gestalt mit zwei voneinander abgewandten Flachseiten (16, 19) bringbar ist.

7. Massekontakt nach Anspruch 6, bei dem eine der voneinander abgewandten Flachseiten des Mantels des Kontaktkörpers wenigstens teilweise an der Gerätekontaktfläche anliegt oder anlegbar ist und die andere der beiden Flachseiten des Mantels des Kontaktkörpers wenigstens teilweise an der Massekontaktfläche anliegt oder anlegbar ist.

8. Massekontakt nach Anspruch 7, bei dem der Kontaktkörper an der Gerätekontaktfläche und/oder der Massekontaktfläche mittels einer Klebeverbindung befestigt ist.

9. Massekontakt nach Anspruch 8, bei dem die Klebeverbindung mit einem elektrisch leitenden Klebematerial gebildet ist.

10. Massekontakt nach Anspruch 8, bei dem die Klebeverbindung mit einem elektrisch isolierenden Klebematerial gebildet ist, das nur in einem Teilbereich des Kontaktkörpers und der Gerätekontaktfläche und/oder Massekontaktfläche vorgesehen ist, so daß bei einer Verformung des Kontaktkörpers außerhalb der Klebeverbindung sich noch der Mantel des Kontaktkörpers und die Gerätekontaktfläche und/oder Massekontaktfläche zur elektrischen Kontaktierung berühren.

11. Elektrisches Gerät, insbesondere elektrischer Motor, mit einem Massenkontakt nach einem der Ansprüche 1 bis 10.

12. Elektrisches Gerät, insbesondere elektrischer Motor, mit einem Massekontakt nach Anspruch 1 oder einem der auf Anspruch 1 rückbezogenen Ansprüche und mit einer mit elektrischen oder elektronischen Bauteilen bestückten Leiterplatte (5), wobei die Gerätekontaktfläche des Massekontakts, vorzugsweise mit einer Metallisierung, an der Leiterplatte (5), vorzugsweise in einem vorderen Bereich (A) der Leiterplatte, gebildet ist.

13. Elektrisches Gerät nach Anspruch 11 oder Anspruch 12 mit einer Entstörungsschaltung, die wenigstens zwei über den Massekontakt gemeinsam gegen Masse schaltbare oder geschaltete Kondensatoren (9A, 9B) aufweist.

14. Elektrisches Gerät nach Anspruch 12 und Anspruch 13, bei dem die Kondensatoren auf der Leiterplatte, vorzugsweise in einem hinteren Bereich der Leiterplatte, angeordnet und kontaktiert sind, vorzugsweise in SMD-Technik.

15. Elektrisches Gerät nach Anspruch 14, bei dem die Leiterbahnen (30) an der Leiterplatte zur Verbindung der Kondensatoren mit der Gerätekontaktfläche möglichst kurz gewählt sind, insbesondere höchstens 5 mm, vorzugsweise höchstens 3 mm.

16. Elektrisches Gerät nach einem der Ansprüche 11 bis 15 mit einem Steckkontaktelement (6) zum Verbinden des elektrischen Gerätes mit einer Versorgungsspannungsquelle.

17. Elektrisches Geräte nach Anspruch 12 und Anspruch 16, bei dem das Steckkontaktelement einzelne Kontaktstifte (21, 22, 23) aufweist, die an ihren vom Steckkontaktelement abgewandten Enden mit der Leiterplatte kontaktiert sind, vorzugsweise in einem mittleren Bereich (B) der Leiterplatte.

18. Elektrisches Gerät nach Anspruch 17, bei dem der, vorzugsweise mittlere, Bereich der Leiterplatte, in dem die Kontaktstifte kontaktiert sind, zumindest vom Bereich (A) mit der Gerätekontaktfläche elektrisch isoliert ist.

19. Elektrisches Gerät nach Anspruch 18, bei dem über den Bereich der Leiterplatte, in dem die Kontaktstifte kontaktiert sind, eine Abdeckung aus einem dielektrischen Material angeordnet oder anordenbar, insbesondere gesteckt oder gerastet oder steckbar oder rastbar, ist.

20. Elektrische Gerät nach einem der Ansprüche 15 bis 19, bei dem ein Gehäuse des Steckkontaktelementes, vorzugsweise in einem vorderen Bereich der Leiterplatte, an der Leiterplatte befestigt ist.

21. Anordnung mit einem elektrischen Gerät nach einem der Ansprüche 11 bis 20 und einem Gerätegehäuse (2) für das elektrische Gerät, das als Masse für das elektrische Gerät vorgesehen ist und mit dem Kontaktkörper kontaktierbar oder kontaktiert ist.

22. Anordnung nach Anspruch 21, bei dem das Gerätegehäuse eine Öffnung (27) aufweist und der Kontaktkörper des Massekontaktes mit der Innenwandung der Öffnung in Kontakt bringbar oder in Kontakt steht.

23. Anordnung nach Anspruch 21 oder 22, bei der das Steckkontaktelement des elektrischen Gerätes gemäß einem der Ansprüche 17 bis 20 durch die Öffnung im Gerätegehäuse geführt ist und der Kontaktkörper unter elastischer Verformung zwischen dem Steckkontaktelement und dem Gehäuse angeordnet oder anordenbar ist.

24. Anordnung nach Anspruch 23, bei der ein Lagerschild (3) vorgesehen ist und bei Zusammenfügen des Gehäuses (2) mit dem Lagerschild (3) der Kontaktkörper gegen das Gehäuse gedrückt wird.

## Claims

1. An earthing contact for an electrical device, particularly an electric motor, having at least one contact body (1) which has an elastically deformable core (18) made from an elastomer and a flexible and electrically conductive sheath (17) which surrounds the core and contains at least one metal, **characterised in that** the earthing contact has a device contact face (10), which is or may be electrically connected to the device, and an earthing contact face (40) which is or may be electrically connected to earth, wherein the contact body (1) is arranged, or may be arranged, between the device contact face (10) and the earthing contact face (40) for the purpose of making electrical contact therewith.

2. An earthing contact according to Claim 1, in which the sheath of the contact body is formed from a woven fabric or net or fine mesh grid, preferably in the manner of a highfrequency seal.

3. An earthing contact according to Claim 1 or Claim 2, in which the sheath of the contact body contains at least one metal, particularly copper and/or nickel.

4. An earthing contact according to one of the preceding claims, in which the core of the contact body (1) is formed from a closed-cell elastomer.

5. An earthing contact according to one of the preceding claims, in which the contact body has, at least partially or continuously, an at least approximately rectangular or oval cross-section.

6. An earthing contact according to one of the preceding claims, in which the sheath of the contact body has at least two mutually opposing flat sides (16, 19) or, with elastic deformation, may be made into a shape having two mutually opposing flat sides (16, 19).

7. An earthing contact according to Claim 6, in which one of the mutually opposing flat sides of the sheath of the contact body abuts, or may be placed, at least partially against the device contact face and the other of the two flat sides of the sheath of the contact body abuts, or may be placed, at least partially against the earthing contact face.

8. An earthing contact according to Claim 7, in which the contact body is fixed to the device contact face and/or the earthing contact face by means of an adhesive connection.

9. An earthing contact according to Claim 8, in which the adhesive connection is formed by an electrically conductive adhesive material.

10. An earthing contact according to Claim 8, in which the adhesive connection is formed by an electrically insulating adhesive material which is provided only in a part region of the contact body and the device contact face and/or earthing contact face so that, in the event of a deformation of the contact body outside the adhesive connection, the sheath of the contact body and the device contact face and/or earthing contact face still touch one another for the purpose of making electrical contact.

11. An electrical device, particularly an electric motor, having an earthing contact according to one of Claims 1 to 10.

12. An electrical device, particularly an electric motor, having an earthing contact according to Claim 1 or one of the claims relating to Claim 1, and having a printed circuit board (5) which is equipped with electrical or electronic components, the device contact face of the earthing contact being formed on the printed circuit board (5), preferably in a front region (A) of the printed circuit board, preferably with a metal coating.

13. An electrical device according to Claim 11 or Claim 12 having an interference suppression circuit which has at least two capacitors (9A, 9B) which may be connected, or are connected, to earth jointly by way of the earthing contact.

14. An electrical device according to Claim 12 and Claim 13, in which the capacitors are arranged and contacted on the printed circuit board, preferably in a rear region of the printed circuit board, preferably using the SMD technique.

15. An electrical device according to Claim 14, in which the circuit-board conductors (30) on the printed circuit board are selected to be as short as possible, particularly a maximum of 5 mm, preferably a maximum of 3 mm, to connect the capacitors to the device contact face.

16. An electrical device according to one of Claims 11 to 15, having a plug-in contact element (6) for connecting the electrical device to a supply voltage source.

17. An electrical device according to Claim 12 and Claim 16, in which the plug-in contact element has individual contact pins (21, 22, 23) which are contacted by the printed circuit board at their ends opposite the plug-in contact element, preferably in a central region (B) of the printed circuit board.

18. An electrical device according to Claim 17, in which the, preferably central, region of printed circuit board in which the contact pins are contacted is electrically insulated at least from the region (A) having the device contact face.

19. An electrical device according to Claim 18, in which a cover made from a dielectric material is or may be arranged, particularly plugged in or latched in, over the region of the printed circuit board in which the contact pins are contacted.

20. An electrical device according to one of Claims 15 to 19, in which a housing of the plug-in contact element is fixed to the printed circuit board, preferably in a front region of the printed circuit board.

21. An arrangement having an electrical device according to one of Claims 11 to 20 and a device housing (2) for the electrical device, which is provided as earth for the electrical device and may be contacted, or is contacted, by the contact body.

22. An arrangement according to Claim 21, in which the device housing has an opening (27) and the contact body of the earthing contact may be brought into contact, or is in contact, with the inside wall of the opening.

23. An arrangement according to Claim 21 or 22, in which the plug-in contact element of the electrical device according to one of Claims 17 to 20 is guided through the opening in the device housing and, with elastic deformation, the contact body is arranged, or may be arranged, between the plug-in contact element and the housing.

24. An arrangement according to Claim 23, in which an end shield (3) is provided and the contact body is pressed against the housing when the housing (2) and the end shield (3) are joined together.

## Revendications

1. Contact de masse pour un appareil électrique, notamment un moteur électrique, comportant au moins un corps de contact (1), qui comprend un noyau élastiquement déformable (18) formé d'un élastomère, et une enveloppe flexible électriquement conductrice (17), qui entoure le noyau et contient au moins un métal, **caractérisé en ce que** la masse de contact possède une surface de contact d'appareil (10), reliée ou pouvant être reliée électriquement à l'appareil, et une surface de contact de masse (40) reliée ou pouvant être reliée électriquement à la masse, le corps de contact (1) étant disposé ou pouvant être disposé entre la surface de contact d'appareil (10) et la surface de contact de masse (40) pour leur connexion électrique.

2. Contact de masse selon la revendication 1, dans lequel l'enveloppe du corps de contact est formée par un tissu ou un réseau ou une grille à mailles fines, de préférence à la manière d'un système d'étanchéité vis-à-vis des hautes fréquences.

3. Contact de masse selon la revendication 1 ou la revendication 2, dans lequel l'enveloppe du corps de contact contient au moins un métal, notamment du cuivre et/ou du nickel.

4. Contact de masse selon l'une des revendications précédentes, dans lequel le noyau du corps de contact (1) est formé par un élastomère à cellules fermées.

5. Contact de masse selon l'une des revendications précédentes, dans lequel le corps de contact possède au moins partiellement ou de façon continue une section transversale au moins approximativement rectangulaire ou ovale.

6. Contact de masse selon l'une des revendications précédentes, dans lequel l'enveloppe du corps de contact comprend au moins deux côtés plats (16, 19) situés à l'opposé l'un de l'autre ou peut être amenée, moyennant une déformation élastique, à avoir une configuration comportant deux côtés plats (16, 19) situés à l'opposé l'un de l'autre.

7. Contact de masse selon la revendication 6, dans lequel l'un des côtés plats, tournés à l'opposé l'un de l'autre, de l'enveloppe du corps de contact s'applique ou peut être appliqué au moins partiellement contre la surface de contact d'appareil et l'autre des deux côtés plats de l'enveloppe du corps de contact s'applique ou peut s'appliquer au moins partiellement contre la surface de contact de masse.

8. Contact de masse selon la revendication 7, dans lequel le corps de contact est fixé au moyen d'une liaison par adhésif, à la surface de contact d'appareil et/ou à la surface de contact de masse.

9. Contact de masse selon la revendication 9, dans lequel la liaison par adhésif est formée avec un matériau adhésif électriquement conducteur.

10. Contact de masse selon la revendication 8, dans lequel la liaison par adhésif est réalisée avec un matériau adhésif électriquement isolant, qui est prévu uniquement dans une zone partielle du corps de contact et de la surface de contact d'appareil et/ou de la surface de contact de masse, de sorte que lors d'une déformation du corps de contact à l'extérieur de la liaison par adhésif, l'enveloppe du corps de contact et la surface de contact d'appareil et/ou la surface de contact de masse se touchent encore pour l'établissement du contact électrique.

11. Appareil électrique, notamment moteur électrique, comportant un contact de masse selon l'une des revendications 1 à 10.

12. Appareil électrique, notamment moteur électrique, comportant un contact de masse selon la revendication 1 ou l'une des revendications rattachées à la revendication 1, et une plaquette à circuits imprimés (5) équipée de composants électriques ou électroniques, la surface de contact d'appareil du contact de masse, de préférence pourvue d'une métallisation, est formée sur la plaquette à circuits imprimés (5), de préférence dans une zone avant (A) de la plaquette à circuits imprimés.

13. Appareil électrique selon la revendication 11 ou la revendication 12, comportant un circuit d'antiparasitage, qui comporte au moins deux condensateurs (9A, 9B) commutés ou pouvant être commutés en commun à la masse ou par l'intermédiaire du contact de masse.

14. Appareil électrique selon la revendication 12 et la revendication 13, dans lequel les condensateurs sont disposés sur la plaquette à circuits imprimés, de préférence dans une partie arrière de la plaquette à circuits imprimés et sont en contact de préférence selon une technique SMD.

15. Appareil électrique selon la revendication 14, dans lequel les voies conductrices (30) situées sur la plaquette à circuits imprimés sont choisies aussi courtes que possible pour relier les condensateurs à la surface de contact d'appareil, notamment avec une valeur égale au maximum à 5 mm et de préférence au maximum à 3 mm.

16. Appareil électrique selon l'une des revendications 11 à 15, comportant un élément de contact à enfichage (6) pour relier l'appareil électrique à une source de tension d'alimentation.

17. Appareil électrique selon la revendication 12 et la revendication 16, dans lequel l'élément de contact à enfichage comporte des broches individuelles de contact (21, 22, 23), qui sont placées en contact, au niveau de leurs extrémités tournées à l'opposé de l'élément de contact à enfichage, avec la plaquette à circuits imprimés, de préférence dans une zone médiane (B) de la plaquette à circuits imprimés.

18. Appareil électrique selon la revendication 17, dans lequel la partie, de préférence médiane, de la plaquette à circuits imprimés, dans laquelle un contact est établi avec les broches de contact, est électriquement isolée au moins vis-à-vis de la partie (A) pourvue de la surface de contact d'appareil.

19. Appareil électrique selon la revendication 18, dans lequel un élément de recouvrement formé d'un matériau diélectrique est disposé ou peut être disposé et notamment est enfiché ou peut être enfiché ou est encliqueté ou peut être encliqueté au-dessus de la zone de la plaquette à circuits imprimés, dans laquelle un contact est établi avec les broches de contact.

20. Appareil électrique selon l'une des revendications 15 à 19, dans lequel un boîtier de l'élément de contact à enfichage est fixé à la plaquette à circuits imprimés, de préférence dans une partie avant de la plaquette à circuits imprimés.

21. Dispositif comportant un appareil électrique selon l'une des revendications 11 à 20 et un boîtier d'appareil (2) pour l'appareil électrique, qui est prévu en tant que masse pour l'appareil électrique et peut être en contact avec le corps de contact.

22. Dispositif selon la revendication 21, dans lequel le boîtier d'appareil possède une ouverture (27) et le corps de contact du contact de masse est ou peut être placé en contact avec la paroi intérieure de l'ouverture.

23. Dispositif selon la revendication 21 ou 22, dans lequel l'élément de contact à enfichage de l'appareil électrique selon l'une des revendications 17 à 20 est guidé dans l'ouverture du boîtier d'appareil et le corps de contact est disposé ou peut être disposé, moyennant une déformation élastique, entre l'élément de contact à enfichage et le boîtier.

24. Dispositif selon la revendication 23, dans lequel il est prévu un flasque de palier (3) et que le corps de contact est repoussé contre le boîtier lors de la réunion du boîtier (2) au flasque de palier (3).
